# EUROPÄISCHE PATENTSCHRIFT

(11) **EP 2 246 214 B1**
(45) Veröffentlichungstag und Bekanntmachung des Hinweises auf die Patenterteilung: **18.04.2018**
(21) Anmeldenummer: 10161358.6
(22) Anmeldetag: 28.04.2010
(51) Int. Cl.: B60K 35/00, G06F 3/01, G06F 3/048

(54) **Verfahren und Vorrichtung zum Anzeigen von in Listen geordneter Information**
Method and device for displaying information arranged in lists
Procédé et dispositif d'affichage d'informations ordonnées dans des listes

(30) Priorität: 30.04.2009 DE 102009019560
(43) Veröffentlichungstag der Anmeldung: 03.11.2010
(73) Patentinhaber: Volkswagen Aktiengesellschaft, 38440 Wolfsburg (DE)
(72) Erfinder: Hauschild, Frank, 10587, Berlin (DE); Kuhn, Mathias, 14129, Berlin (DE); Dehmann, Rainer, 10961, Berlin (DE)
(74) Vertreter: Reitstötter Kinzebach

(56) Entgegenhaltungen:
- EP-A2- 0 880 090
- EP-A2- 1 607 850
- DE-A1-102006 028 046
- US-A1- 2006 262 103
- US-A1- 2009 064 031

## Beschreibung

Die vorliegende Erfindung betrifft ein Verfahren und eine Vorrichtung zum Anzeigen von in Listen geordneter Information. Die Anzeige erfolgt insbesondere in einem Fahrzeug. Die Vorrichtung umfasst eine Anzeigevorrichtung mit einer Anzeigefläche, einem Speicher zum Speichern einer Liste, die eine Vielzahl von Listeneinträgen umfasst, von der eine Teilmenge auf der Anzeigefläche anzeigbar ist, eine Eingabeeinrichtung und eine Steuervorrichtung, die mit der Eingabeeinrichtung und der Anzeigevorrichtung gekoppelt ist und mit welcher die auf der Anzeigefläche wiedergegebene Anzeige steuerbar ist.

In einem Fahrzeug werden herkömmlicherweise verschiedene Informationen angezeigt, die insbesondere betriebsbezogene Daten des Fahrzeugs für den Fahrer visuell darstellen. Des Weiteren können in dem Fahrzeug für den Fahrer verkehrsbezogene Daten dargestellt werden. Für die Anzeige dieser Informationen wurden früher analoge mechanische Anzeigeinstrumente verwendet. Diese waren insbesondere innerhalb des so genannten Kombiinstruments in der Nähe des primären Sichtfelds des Fahrers hinter dem Lenkrad angeordnet. Das Kombiinstrument dient insbesondere der Anzeige der Geschwindigkeit, des Tankinhalts, der Kühlertemperatur und anderer betriebsbezogener Informationen des Fahrzeugs.

Mit der Zunahme elektronischer Einrichtungen im Fahrzeug wurde es erforderlich, eine größere Informationsmenge im Fahrzeug darzustellen. Moderne Fahrzeuge umfassen beispielsweise eine Vielzahl von Fahrerassistenzsystemen, deren Informationen im Fahrzeug angezeigt werden müssen. Des Weiteren umfassen Fahrzeuge vielfach ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge häufig Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Aus diesem Grund werden in Fahrzeugen vielfach Multifunktionsbediensysteme eingesetzt, welche eine oder mehrere Multifunktionsanzeige(n) und Bedienelemente umfassen, mit denen die vielfältigen im Fahrzeug enthaltenen Einrichtungen bedient werden können. Die Bedienung wird dabei durch die auf der Multifunktionsanzeige wiedergegebene Information unterstützt bzw. geführt. Ferner kann über das Bediensystem ausgewählt werden, welche Informationen auf der Multifunktionsanzeige angezeigt werden sollen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Die Multifunktionsanzeigen werden in Verbindung mit einem Bediensystem betrieben, welches verschiedene Bedienelemente umfassen kann. In der DE 199 41 956 A1 sind z. B. mehrere Auswahl- und Funktionstasten zur Ansteuerung der Fahrzeugeinrichtungen vorgesehen. In der DE 199 41 960 A1 ist andererseits ein Multifunktionsbedienelement zur Auswahl von Funktionsgruppen und individuellen Funktionen beschrieben, das einen bidirektional drehbaren Zylinder umfasst, der ferner senkrecht zur Rotationsachse bewegbar ist.

Des Weiteren ist aus der EP 0 366 132 B1 eine Multifunktionsbedieneinrichtung bekannt, bei der die Auswahl von Funktionsgruppen und die Auswahl individueller Funktionen mittels eines Drehdrückschalters erfolgt, bei dem der Schalter in Richtung der Drehachse betätigbar ist. Aus der DE 199 44 324 ist eine Multifunktionsbedienvorrichtung bekannt, die einen Drehschalter zur Auswahl von Funktionen aufweist, die innerhalb eines Anzeigefeldes eines Displays darstellbar sind. Um den Drehschalter herum sind Druckschalter angeordnet, denen ebenfalls Anzeigefelder des Displays zugeordnet sind. Schließlich ist aus der DE 103 24 579 A1 eine Bedienvorrichtung zur Steuerung von Fahrzeugeinrichtungen bekannt, die ein berührungsempfindliches Bedienfeld aufweist.

Neben den vorstehend beschriebenen abgesetzten Bedienelementen wurde ferner vorgeschlagen, das Display selbst mit einer berührungsempfindlichen Oberfläche auszustatten und auf diese Weise einen so genannten Touchscreen zur Verfügung zu stellen. Bei einem solchen Touchscreen erfolgt die Bedienung dadurch, dass der Nutzer z. B. mit seiner Fingerspitze den Touchscreen berührt. Die Position der Berührung wird erfasst, ausgewertet und einem Bedienschritt zugeordnet. Um den Nutzer bei der Bedienung zu unterstützen, können auf dem Display virtuelle Schalter als graphische Schaltflächen dargestellt werden. Eine Anzeigevorrichtung mit einer berührungsempfindlichen Oberfläche, die in Verbindung mit einem Navigationssystem eingesetzt wird, ist beispielsweise in der DE 10 2005 020 155 A1 beschrieben.

Für die Anzeige von Information in einem Fahrzeug und für die Bedienung der vielfältigen Einrichtungen des Fahrzeugs ergeben sich sehr spezielle Anforderungen. Die Informationsaufnahme und die Bedienung erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Gleichermaßen sollte die Bedienung der Fahrzeugeinrichtungen so einfach und intuitiv wie möglich durchführbar sein, so dass der Fahrer die Einrichtungen auch während der Fahrt bedienen kann. Wird die Bedienung von einer Anzeige unterstützt oder geführt, sollte die Anzeige so erfolgen, dass der Fahrer für die Bedienung nur sehr kurz die Anzeige betrachten muss, um die Bedienung durchzuführen.

Die Darstellung von Information in einem Fahrzeug erfolgt vielfach dadurch, dass eine Teilmenge einer Gesamtinformation auf der Anzeigefläche in dem Fahrzeug angezeigt wird und der Nutzer die Teilmenge verändern kann. Die Gesamtinformation kann beispielsweise eine Liste mit einer Vielzahl von Listeneinträgen betreffen. Von der Gesamtliste wird eine Teilmenge der Listeneinträge angezeigt. Durch einen Bedienvorgang kann der Nutzer einen Bildlauf (Scrollen) hervorrufen, um andere Listeneinträge zur Anzeige zu bringen.

In der DE 10 2007 039 442 A1 ist beispielsweise ein Verfahren zum Anzeigen von Informationen in einem Fahrzeug beschrieben, bei dem graphische Objekte, welche Listeneinträgen in einer Liste zugeordnet sind, auf einem virtuellen, perspektivisch dargestellten Ring angeordnet dargestellt werden. Mittels einer Eingabeeinrichtung können die Listeneinträge auf dem virtuellen Ring karusellartig gedreht werden. Bei der Darstellung von Listeneinträgen auf einem virtuellen Ring ergibt sich jedoch das Problem, dass einige Listeneinträge von anderen Listeneinträgen verdeckt werden, so dass der Nutzer gegebenenfalls nicht mehr erkennen kann, um was für einen Listeneintrag es sich handelt. Um den Informationsinhalt eines solchen verdeckten Listeneintrags aufnehmen zu können muss der Nutzer diesen Listeneintrag erst auf dem virtuellen Ring nach vorne drehen. Hierdurch wird jedoch die Bediendauer bei der Auswahl von Listeneinträgen verlängert, was insbesondere bei dem Einsatz des Verfahrens in einem Fahrzeug nachteilig ist.

Die EP 1 607 850 A2 beschreibt ein Verfahren und eine Vorrichtung zum Darstellen von Informationen in einem Fahrzeug. Dabei kann für eine angezeigte Liste ein Bildlauf erzeugt werden, wenn nicht alle Listeneinträge gleichzeitig angezeigt werden können. Ein ausgewählter Listeneintrag wird dann hervorgehoben, z.B. fett umrandet dargestellt.

Die DE 10 2006 028 046 A1 beschreibt eine Anzeige- und Bedienvorrichtung für Kraftfahrzeuge, bei denen für die Informationsdarstellung zwischen einem Informationsmodus und einem Bedienmodus, in dem die Anwahl von Bedienfunktion ermöglicht wird, umgeschaltet werden kann. Das Umschalten erfolgt insbesondere in Abhängigkeit von der Annäherung eines Objekts an die Anzeige- und Bedienvorrichtung und bewirkt für eine Listendarstellung, dass einzelne Listeneinträge größer und voneinander beabstandet als Tasten angezeigt werden, sodass sie leichter zu bedienen sind. Die Listeneinträge können über geeignete Tasten durchlaufen werden, sodass die ganze Liste sequentiell einsehbar ist.

Es ist die Aufgabe der vorliegenden Erfindung, ein Verfahren und eine Vorrichtung der Eingangs genannten Art bereitzustellen, bei denen zum einen die Listeneinträge gut erkennbar angezeigt werden und zum anderen schnell erfassbar ist, wenn ein bestimmter Listeneintrag ausgewählt worden ist.

Diese Aufgabe wird erfindungsgemäß durch ein Verfahren mit den Merkmalen des Anspruchs 1 und eine Vorrichtung mit den Merkmalen des Anspruchs 7 gelöst. Vorteilhafte Aus- und Weiterbildungen ergeben sich aus den abhängigen Ansprüchen.

Bei dem erfindungsgemäßen Verfahren erfolgt die Informationsdarstellung in einem Bedienzustand und in einem Anzeigezustand. Im Bedienzustand ist ein Bedienvorgang mittels einer Eingabeeinrichtung durchführbar. Im Anzeigezustand ist hingegen kein Bedienvorgang mittels der Anzeigeeinrichtung durchführbar. Des Weiteren wird auf der Anzeigefläche eine Teilmenge einer Liste angezeigt, die mehrere Listeneinträge umfasst, wobei die Listeneinträge jeweils einen Bereich der Anzeigefläche einnehmen. Die angezeigte Teilmenge der Liste wird im Bedienzustand durch einen ersten Bedienvorgang eines Nutzers verändert, wobei sich die Fläche, die ein Listeneintrag auf der Anzeigefläche einnimmt, nicht verändert. Das erfindungsgemäße Verfahren ist dadurch gekennzeichnet, dass, wenn ein Listeneintrag im Bedienzustand durch einen zweiten Bedienvorgang eines Nutzers ausgewählt worden ist, der ausgewählte Listeneintrag im Anzeigezustand in den Vordergrund gerückt wird und die restlichen Listeneinträge der Liste in den Hintergrundgerückt werden, indem sie perspektivisch nach hinten geschwenkt dargestellt werden.

Bei dem erfindungsgemäßen Verfahren wird grundsätzlich zwischen zwei Informationsdarstellungen unterschieden. Es gibt den Bedienzustand, bei welchem mittels einer Eingabeeinrichtung ein Bedienvorgang durchgeführt werden kann. Der Bedienvorgang kann beispielsweise durch Schaltflächen, die auf der Anzeigefläche angezeigt werden, unterstützt werden. Diese Schaltflächen können durch direkte Berührung oder durch die Steuerung eines Cursors vom Nutzer ausgewählt werden, woraufhin Funktionen ausgeführt werden, die den jeweiligen Schaltflächen zugeordnet sind. Im Gegensatz dazu kann im Anzeigezustand kein Bedienvorgang mittels der Eingabevorrichtung durchgeführt werden. Die in diesem Fall dargestellte Information dient somit nicht einer Visualisierung möglicher Bedienschritte. Um einen Bedienvorgang zu initiieren, muss die Informationsdarstellung erst vom Anzeigezustand in den Bedienzustand wechseln. Es wird darauf hingewiesen, dass diese Art der Informationsdarstellung gegebenenfalls auch nur einen Teil der gesamten Anzeigefläche einnehmen kann. Außerdem können Teile der Darstellung im Bedienzustand identisch mit der Darstellung im Anzeigezustand sein. Der Unterschied zwischen den beiden Zuständen liegt in der Möglichkeit Eingaben mittels der Eingabevorrichtung vorzunehmen bzw. einen Bedienvorgang mittels der Eingabevorrichtung durchzuführen.

Durch den ersten Bedienvorgang des erfindungsgemäßen Verfahrens, kann der Nutzer einen Bildlauf (Scrollen) durch die Liste erzeugen, bei dem nacheinander vorhergehende oder nachfolgende Listeneinträge angezeigt werden. Dabei bleibt die Anzahl der angezeigten Listeneinträge insbesondere gleich, es wird nur eine andere Teilmenge der Liste angezeigt. Die Fläche, die ein Listeneintrag auf der Anzeigefläche einnimmt, bleibt dabei immer gleich Das erfindungsgemäße Verfahren zeichnet sich dadurch aus, dass ein ausgewählter Listeneintrag im Anzeigezustand hervorgehoben dargestellt wird, indem er im Vordergrund angezeigt wird.

Durch die Anzeige mittels des erfindungsgemäßen Verfahrens wird es möglich, im Bedienzustand die angezeigte Teilmenge der Liste so darzustellen, dass immer alle Listeneinträge vollständig erkennbar sind, unabhängig davon, welche Teilmenge der Liste für die Anzeige ausgewählt worden ist. Dabei kann im Anzeigezustand vom Nutzer sehr schnell erfasst werden, welcher Listeneintrag ausgewählt worden ist, da dieser im Vordergrund angezeigt wird. Da bei dem erfindungsgemäßen Verfahren Listeneinträge sehr schnell und intuitiv erfasst und ausgewählt werden können und ausgewählte Listeneinträge sehr schnell erfasst werden können, lässt sich das erfindungsgemäße Verfahren vorteilhaft in einem Fahrzeug, insbesondere in einem Kraftfahrzeug, einsetzen.

Gemäß einer bevorzugten Ausgestaltung des erfindungsgemäßen Verfahrens wird von dem Anzeigezustand in den Bedienzustand gewechselt, wenn eine Annäherung eines Objekts an die Eingabeeinrichtung detektiert wurde. Ferner wird von dem Bedienzustand zurück in den Anzeigezustand gewechselt, wenn ein Entfernen eines Objekts von der Eingabeeinrichtung detektiert wurde. Vorzugsweise wird in diesem Fall jedoch nur dann von dem Bedienzustand in den Anzeigezustand gewechselt, wenn das Objekt nicht innerhalb eines definierten Zeitintervalls wieder in eine Bedienzone eintritt.

Diese Ausgestaltungen des erfindungsgemäßen Verfahrens haben den Vorteil, dass der Wechsel zwischen dem Bedienzustand und dem Anzeigezustand automatisch erfolgt, ohne dass ein gesonderter Bedienschritt hierfür von dem Nutzer erforderlich ist. Will nämlich der Nutzer einen Bedienvorgang ausführen, nähert er sich mit einem Objekt, wie z. B. seiner Hand bzw. seiner Fingerspitze, der Eingabeeinrichtung an. Bei dieser Annäherung tritt das Objekt ab einer gewissen Nähe zu der Eingabeeinrichtung in eine Bedienzone ein. Dieser Eintritt in die Bedienzone wird als Bedienabsicht des Nutzers interpretiert, so dass die Informationsdarstellung auf der Anzeigefläche automatisch von dem Anzeigezustand in den Bedienzustand wechselt. In diesem Fall können bestimmte graphische Objekte, wie z. B. Listeneinträge von reinen Anzeigeobjekten in Schaltflächen umgewandelt werden, die betätigt werden können. Ferner können die Schaltflächen größer als im Anzeigezustand angezeigt werden, um eine Betätigung auch in Umgebungen, wie z. B. im Kraftfahrzeug, zu ermöglichen, bei denen Vibrationen auftreten und eine schnelle Betätigung wünschenswert ist. Die Annäherung an die Eingabeeinrichtung ist für den Nutzer eine intuitive Vorgehensweise, um einen Bedienvorgang durchzuführen. Eine solche Annäherung kann bei einem Einsatz in einem Kraftfahrzeug auch vom Fahrer ausgeführt werden, ohne den Blick vom Fahrgeschehen abzuwenden. Der Nutzer kann erst nach der Annäherung an die Eingabeeinrichtung seinen Blick kurzzeitig auf die Anzeigefläche richten die in diesem Fall bereits den Bedienzustand wiedergibt. Entfernt der Nutzer nach der Betätigung der Eingabeeinrichtung seine Hand wieder von der Eingabeeinrichtung, wird dies detektiert und die Informationsdarstellung wechselt wieder automatisch in den Anzeigezustand, sofern der Nutzer seine Hand nicht innerhalb eines definierten Zeitintervalls wieder in die Bedienzone bringt. Im Anzeigezustand können dem Nutzer dann die Informationen in einer reduzierteren Darstellung dargeboten werden, da Information, welche einen Bedienvorgang unterstützt, nicht mehr erforderlich ist. Bei einem Einsatz im Kraftfahrzeug kann in diesem Fall der Fahrer schnell und intuitiv die angezeigten Informationen erfassen. Er kann insbesondere sehr schnell erfassen, welcher Listeneintrag ausgewählt worden ist, da dieser Listeneintrag im Anzeigezustand im Vordergrund angezeigt wird.

Gemäß einer anderen Ausgestaltung des erfindungsgemäßen Verfahrens wird nicht die Annäherung eines Objekts an die Eingabeeinrichtung und ein Entfernen eines Objekts von der Eingabeeinrichtung detektiert, sondern nur das Berühren einer berührungsempfindlichen Oberfläche der Eingabeeinrichtung. In diesem Fall ist es nicht erforderlich, ein Objekt zu detektieren, bevor es eine Oberfläche der Eingabeeinrichtung berührt. Diese Ausgestaltung des Verfahrens kann daher kostengünstiger implementiert werden.

Die Listeneinträge der angezeigten Teilmenge der Liste werden insbesondere in einer Reihe nebeneinander angezeigt. Die Reihe ist insbesondere horizontal oder vertikal ausgerichtet. Durch den ersten Bedienvorgang werden in diesem Fall die Listeneinträge in der Reihe verschoben.

Gemäß einer weiteren Ausgestaltung des erfindungsgemäßen Verfahrens umfasst die Eingabeeinrichtung eine berührungsempfindliche Oberfläche. Der erste Bedienvorgang kann in diesem Fall eine auf der berührungsempfindlichen Oberfläche ausgeführte Wischgeste sein. Unter einer Wischgeste wird im Sinne der Erfindung eine Bewegung eines Objekts, wie z. B. einer Fingerspitze eines Nutzers oder einer Stiftspitze verstanden, die in einem Erfassungsbereich, wie z. B. auf der berührungsempfindlichen Oberfläche, bei einer bestimmten Position beginnt, auf eine Linie in dem Erfassungsbereich, d. h. auf der berührungsempfindlichen Oberfläche, geführt wird und schließlich bei einer bestimmten Position in dem Erfassungsbereich, d. h. auf der berührungsempfindlichen Oberfläche, endet. Die Linie hat dabei insbesondere die Form, wie sie üblicherweise bei einer Wischbewegung auftritt. Sie verläuft somit leicht gebogen in eine bestimmte Richtung.

Gemäß einer weiteren Ausgestaltung des erfindungsgemäßen Verfahrens umfasst die Eingabeeinrichtung eine auf der Anzeigefläche ausgebildete berührungsempfindliche Oberfläche. Die Anzeigefläche ist in diesem Fall somit als so genannter Touchscreen ausgebildet. Der zweite Bedienvorgang zur Auswahl eines Listeneintrags im Bedienzustand ist in diesem Fall eine Berührung der berührungsempfindlichen Oberfläche in dem von dem Listeneintrag eingenommenen Bereich der Anzeigefläche. Nach dem Wechsel von dem Bedienzustand in den Anzeigezustand wird der ausgewählte Listeneintrag in den Vordergrund gerückt und die restlichen Listeneinträge der Liste in den Hintergrund gerückt. Die restlichen Listeneinträge werden perspektivisch nach hinten geschwenkt dargestellt.

Die erfindungsgemäße Vorrichtung umfasst eine Steuervorrichtung, die so ausgebildet ist, dass die Informationsdarstellung in einem Bedienzustand und in einem Anzeigezustand erfolgt, wobei im Bedienzustand ein Bedienvorgang mittels der Eingabeeinrichtung durchführbar ist und im Anzeigezustand kein Bedienvorgang mittels der Eingabeeinrichtung durchführbar ist. Des Weiteren ist eine Teilmenge der Liste anzeigbar, die mehrere Listeneinträge umfasst, wobei die Listeneinträge jeweils einen Bereich der Anzeigefläche einnehmen. Schließlich ist im Bedienzustand die angezeigte Teilmenge der Liste durch einen ersten Bedienvorgang eines Nutzers veränderbar, wobei sich die Fläche, die ein Listeneintrag auf der Anzeigefläche einnimmt, nicht verändert. Die erfindungsgemäße Vorrichtung ist dadurch gekennzeichnet, dass die Steuervorrichtung ferner so ausgebildet ist, dass ein Listeneintrag vom Nutzer durch einen zweiten Bedienvorgang auswählbar ist, wobei der ausgewählte Listeneintrag im Anzeigezustand in den Vordergrund gerückt wird und die restlichen Listeneinträge der Liste in den Hintergrund gerückt werden, indem sie perspektivisch nach hinten geschwenkt dargestellt werden.

Die erfindungsgemäße Vorrichtung ist insbesondere so ausgestaltet, dass sie die vorstehend beschriebenen Verfahrensschritte teilweise oder vollständig ausführen kann.

Gemäß einer bevorzugten Ausgestaltung der erfindungsgemäßen Vorrichtung umfasst diese einen Annäherungssensor, mit dem ein Eintreten eines Objekts in eine Bedienzone, die der Eingabeeinrichtung zugeordnet ist, und ein Verlassen der Bedienzone detektierbar ist. Der Annäherungssensor misst die Annäherung des Objekts insbesondere kapazitiv. Schließlich kann der Annäherungssensor die Annäherung des Objekts mittels Infrarotstrahlung messen.

Die Steuervorrichtung ist insbesondere so ausgebildet, dass auf der Anzeigefläche beim Eintreten des Objekts in die Bedienzone vom Anzeigezustand in den Bedienzustand gewechselt wird und beim Verlassen der Bedienzone von dem Bedienzustand in den Anzeigezustand gewechselt wird.

Die Eingabeeinrichtung umfasst insbesondere eine berührungsempfindliche Oberfläche. Diese berührungsempfindliche Oberfläche ist insbesondere auf der Anzeigefläche ausgebildet, so dass ein so genannter Touchscreen bereitgestellt wird.

Des Weiteren kann die Eingabeeinrichtung so ausgebildet sein, dass sie eine Geste eines Körperteils eines Nutzers, welche vor der Anzeigefläche ausgeführt wird, erfassen und auswerten kann. Hierfür kann eine Eingabeeinrichtung z. B. eine Empfangseinrichtung umfassen, an die ein Signal von dem Körperteil des Nutzers kapazitiv übertragbar ist, wenn sich das Körperteil in der Nähe der Empfangseinrichtung befindet. Mittels dieser kapazitiven Kopplung kann die Position des Körperteils detektiert werden. Aus der zeitlichen Veränderung dieser Position kann auf eine Geste des Nutzers geschlossen werden. Gemäß einer anderen Ausgestaltung der Eingabeeinrichtung kann zum Erfassen der vor der Anzeigefläche ausgeführten Geste des Körperteils des Nutzers eine Infrarotlichtquelle oder ein Empfänger für reflektiertes Infrarotlicht vorgesehen sein. Auch in diesem Fall kann die Position des Körperteils und deren zeitliche Veränderung erfasst und als Geste interpretiert werden.

Die Erfindung wird nun anhand eines Ausführungsbeispiels mit Bezug zu den Zeichnungen erläutert.
- Figur 1: zeigt schematisch den Aufbau eines Ausführungsbeispiels der erfindungsgemäßen Vorrichtung und die Koppelung dieser Vorrichtung mit anderen Einrichtungen des Fahrzeugs und
- die Figuren 2 bis 7: zeigen Anzeigen der Anzeigevorrichtung, die von einem Ausführungsbeispiel des erfindungsgemäßen Verfahrens erzeugt werden.

Die Vorrichtung zum Anzeigen von Information, die in Listen geordnet ist, ist bei dem im Folgenden beschriebenen Ausführungsbeispiel in einem Fahrzeug, insbesondere einem Kraftfahrzeug, untergebracht. Sie kann jedoch auch von einem beliebigen anderen Gerät umfasst sein, in dem Listen angezeigt und Listeneinträge ausgewählt werden können.

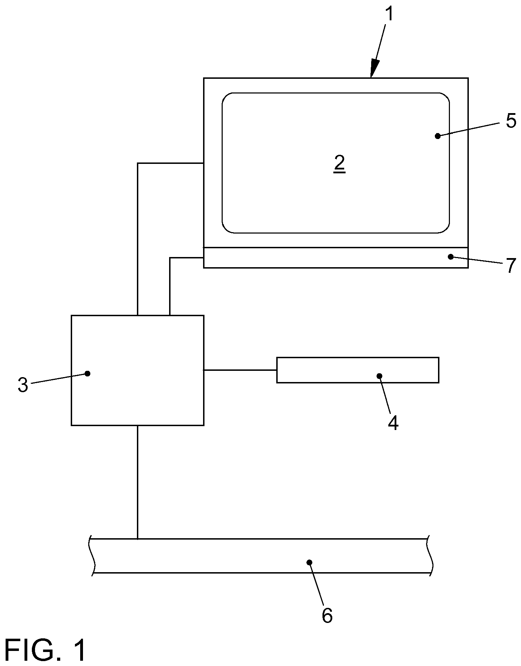

Wie in Fig. 1 gezeigt, umfasst die Vorrichtung eine Anzeigevorrichtung 1 mit einer Anzeigefläche 2. Die Anzeigefläche 2 ist insbesondere so im Innenraum eines Fahrzeugs angeordnet, dass sie von zumindest einem Fahrzeuginsassen, insbesondere dem Fahrer, gut sichtbar ist. Die Anzeigefläche 2 kann von einem Display, insbesondere einem Flüssigkristalldisplay, beliebiger Bauart bereitgestellt werden.

Die Anzeigevorrichtung 1 ist mit einer Steuervorrichtung 3 gekoppelt. Die Steuervorrichtung 3 erzeugt Grafikdaten, die mittels der Anzeigevorrichtung 1 angezeigt werden können. Die Steuervorrichtung 3 ist hierfür mit einem Speicher 4 zum Speichern von Daten verbunden. Die Daten umfassen insbesondere in Listen geordnete Information. Die Liste umfasst eine Vielzahl von Listeneinträgen. Eine Teilmenge der Listeneinträge kann auf der Anzeigefläche 2 der Anzeigevorrichtung 1 angezeigt werden, wie es später erläutert wird.

Des Weiteren ist die Steuervorrichtung 3 mit einem Fahrzeugbus 6 gekoppelt, über welchen Daten mit vielfältigen Einrichtungen des Fahrzeugs ausgetauscht werden können.

Die Steuervorrichtung 3 ist schließlich mit einer Eingabeeinrichtung 5 verbunden. Bei dem vorliegenden Ausführungsbeispiel wird als Eingabeeinrichtung 5 eine berührungsempfindliche Oberfläche verwendet, die auf der Anzeigefläche 2 vorgesehen ist. Beispielsweise kann eine Folie über der Anzeigefläche 2 angeordnet sein. Mit der Folie kann die Position einer Berührung der hinter der Folie angeordneten Anzeigefläche 2 detektiert werden. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von dem Finger eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position einem auf der Anzeigefläche 2 angezeigten grafischen Objekt zugeordnet werden. Des Weiteren können Gleitbewegungen des Fingers über die Folie interpretiert werden. Insbesondere kann der Benutzer auf diese Weise eine Linie auf der Anzeigefläche 2 definieren, indem er an einem Punkt die Folie berührt, zu einem anderen Punkt hin auf der Folie gleitet und den Finger bei dem anderen Punkt von der Folie wegnimmt.

Gemäß einer anderen Ausgestaltung kann als Eingabeeinrichtung ein abgesetztes Bedienelement eingesetzt werden. Bei dem abgesetzten Bedienelement handelt es sich insbesondere um ein mechanisches Bedienelement. Beispielsweise kann ein Drehschalter vorgesehen sein, durch den auf der Anzeigefläche 2 angezeigte Objekte, z. B. mittels eines Cursors, ansteuerbar und durch Drücken des Drehschalters auswählbar sind.

Gemäß einer weiteren Ausgestaltung handelt es sich bei der Eingabeeinrichtung 5 um einen Einrichtung zum Erfassen und Auswerten einer Geste eines Körperteils eines Nutzers. Beispielsweise kann die Hand des Nutzers vor der Anzeigefläche 2 die Geste ausführen. Dabei wird die dreidimensionale Position der Hand in einer bestimmten Bedienzone vor der Anzeigefläche 2 erfasst, ohne dass es erforderlich ist, die Anzeigefläche 2 bzw. eine auf der Anzeigefläche 2 vorgesehene berührungsempfindliche Folie zu berühren. Die Größe der Bedienzone hängt von der Anordnung der Anzeigefläche 2 in dem Kraftfahrzeug ab. Der Bereich sollte so gewählt sein, dass der Aufenthalt der Hand des Nutzers in dieser Bedienzone eindeutig mit der Bedienung der Eingabeeinrichtung 5 in Verbindung gebracht werden kann. Innerhalb der Bedienzone detektiert die Eingabeeinrichtung die Position und die Bewegung der Hand des Nutzers. Dabei werden verschiedene, von der Hand ausgeführte Gesten erkannt und als Eingaben interpretiert.

Des Weiteren kann die Position der Hand und deren zeitliche Veränderung auch mittels eines optischen Systems erfasst werden. Bei diesem System emittiert eine lichtemittierende Diode z. B. rechteckförmiges amplitudenmoduliertes Licht. Dieses Licht wird an dem zu detektierenden Objekt, d. h. der Hand, reflektiert und gelangt nach der Reflexion zu einer Fotodiode. Eine weitere lichtemittierende Diode emittiert ebenfalls rechteckförmiges amplitudenmoduliertes Licht zur Fotodiode, welches jedoch um 180° phasenversetzt ist. Bei der Fotodiode überlagern sich die beiden Lichtsignale und heben sich auf, falls sie genau die gleiche Amplitude aufweisen. Falls sich die Signale bei der Fotodiode nicht aufheben, wird die Lichtemission der zweiten Diode über einen Regelkreis so geregelt, dass sich das Gesamtempfangssignal wieder zu Null ergänzt. Ändert sich die Position des Objekts, ändert sich auch der Lichtanteil, welcher von der ersten lichtemittierenden Diode zur Fotodiode über die Reflexion an dem Objekt gelangt. Dies bewirkt ein Nachführen der Intensität der zweiten lichtemittierenden Diode durch den Regelkreis. Das Regelsignal ist somit ein Maß für die Reflexion des Lichts, welches von der ersten Diode emittiert wird, an dem Objekt. Auf diese Weise lässt sich aus dem Regelsignal ein Signal ableiten, welches für die Position des Objekts charakteristisch ist.

Die Steuervorrichtung 3 ist des Weiteren mit einem Annäherungssensor 7 verbunden, sofern die Annäherung eines Objekts an die Eingabeeinrichtung 5 nicht von der Eingabeeinrichtung 5 selbst detektiert wird. Der Annäherungssensor 7 überträgt an die Steuervorrichtung 3 ein Signal, wenn sich ein Objekt soweit an die Eingageeinrichtung 5 angenähert hat, dass ein voreingestellter Schwellwert unterschritten wird. Vor der Eingabeeinrichtung 5 kann insbesondere eine Bedienzone definiert werden. Der Annäherungssensor 7 detektiert, wenn ein Objekt in diese Bedienzone eintritt und wenn das Objekt die Bedienzone wieder verlässt. Bei dem Objekt kann es sich insbesondere um den Finger eines Nutzers handeln, der die berührungsempfindliche Oberfläche der Anzeigefläche 2 betätigt.

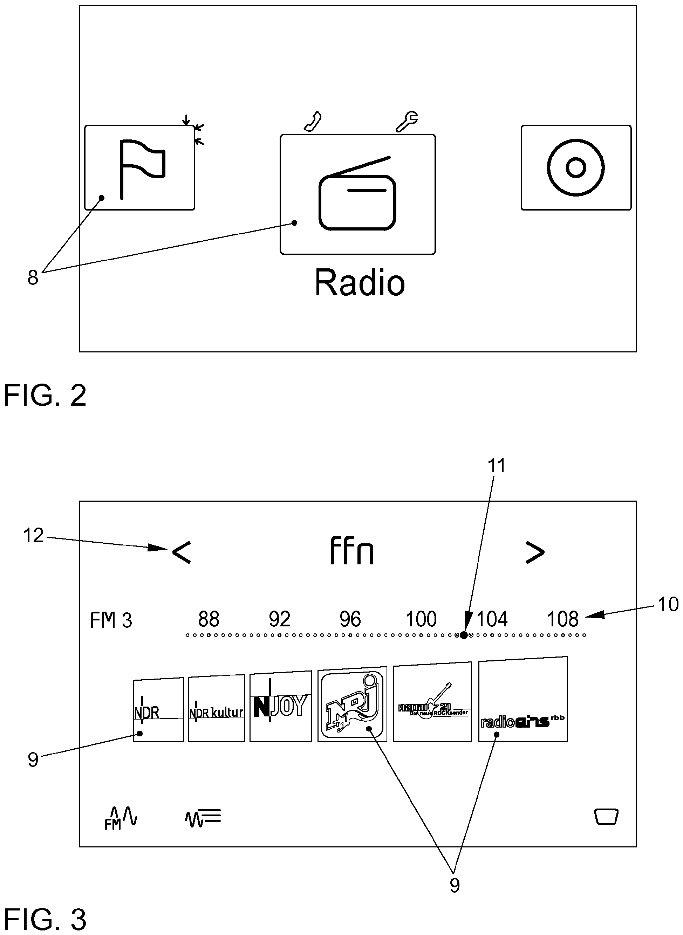

Im Folgenden wird mit Bezug zu den Fig. 2 bis 7 ein Ausführungsbeispiel des erfindungsgemäßen Verfahrens erläutert. Das Verfahren kann von der vorstehend mit Bezug zu Fig. 1 beschriebenen Vorrichtung ausgeführt werden und die in den Fig. 2 bis 7 dargestellten Anzeigen auf der Anzeigefläche 2 erzeugen.

Zunächst wird auf der Anzeigefläche 2, wie in Fig. 2 gezeigt, ein Hauptmenü angezeigt. Das Hauptmenü enthält graphische Objekte 8, die in diesem Fall so dargestellt und hinsichtlich ihrer Position verändert werden können, wie es in der DE 10 2007 039 442 A1 beschrieben ist. Wählt der Nutzer beispielsweise das graphische Objekt 8 aus, welches der Radiofunktion des Fahrzeugs zugeordnet ist, wird die Darstellung auf der Anzeigefläche 2 von der Steuervorrichtung 3 so verändert, dass die in Fig. 3 wiedergegebene Informationsdarstellung angezeigt wird.

Fig. 3 zeigt die Ausgangsdarstellung für die Funktion "Radio". Die Informationsdarstellung erfolgt zunächst in dem Anzeigezustand, bei welchem kein Bedienvorgang durchführbar ist. Auf der Anzeigefläche 2 wird eine Teilmenge einer Liste angezeigt, welche alle empfangbaren Radiosender umfasst. Die einzelnen Radiosender der Teilmenge werden als Listeneinträge 9 dargestellt. Die Listeneinträge 9 sind graphische Objekte, die jeweils einen bestimmten Bereich der Anzeigefläche 2 einnehmen. In dem in Fig. 3 gezeigten Anzeigezustand sind die Listeneinträge 9 für die Radiosender in einer Reihe nebeneinander dargestellt, wobei die Reihe horizontal ausgerichtet ist und perspektivisch nach hinten geschwenkt ist. Ferner wird eine Frequenzskala 10 sowie eine Markierung 11 für die aktuell eingestellte Frequenz dargestellt. Schließlich wird der aktuell eingestellte Radiosender in einem Feld 12 alphanumerisch angezeigt.

Im Folgenden wird davon ausgegangen, dass die Eingabeeinrichtung 5 als berührungsempfindliche Oberfläche der Anzeigefläche 2 ausgebildet ist und der Annäherungssensor 7 die Annäherung des Fingers des Nutzers an die Anzeigefläche 2 detektiert. Der Annäherungssensor 7 kann insbesondere erfassen, wenn die Fingerspitze des Nutzers in eine Bedienzone vor der Anzeigefläche 2 eintritt und wenn die Fingerspitze wieder aus dieser Bedienzone herausbewegt wird, d. h. sich die Fingerspitze über einen bestimmten Schwellwert hinaus von der Anzeigefläche 2 entfernt hat. Das erfindungsgemäße Verfahren kann jedoch auch mit anderen vorstehend beschriebenen Eingabeeinrichtungen und Einrichtungen, die eine Annäherung eines Objekts an die Eingabeeinrichtung und ein Entfernen des Objekts von der Eingabeeinrichtung detektieren, betrieben werden.

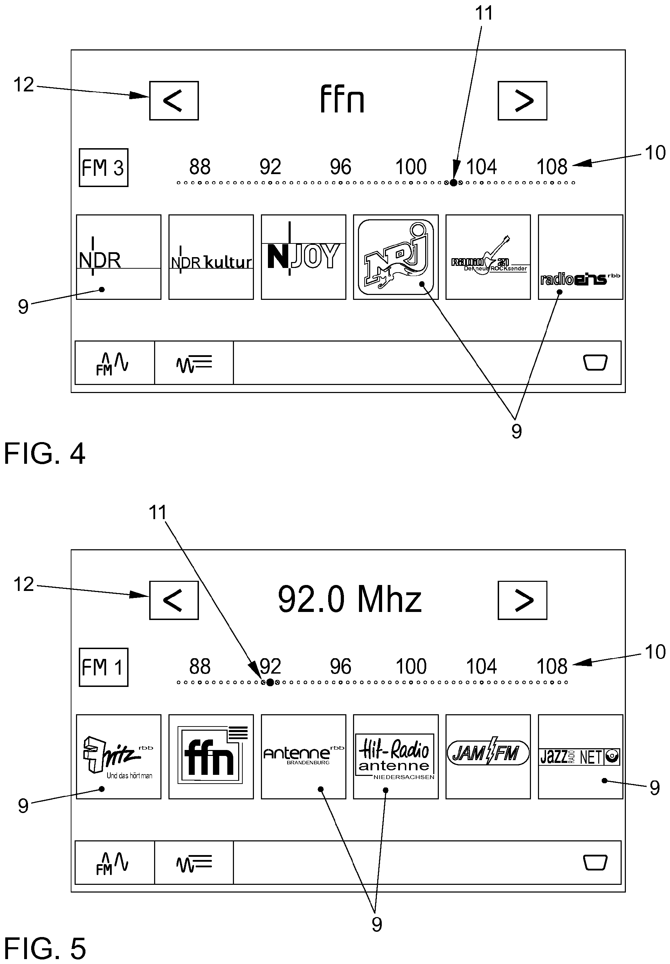

Da die Anzeigefläche 2 nicht groß genug ist, um alle empfangbaren Radiosender anzuzeigen, kann der Nutzer durch einen ersten Bedienvorgang einen Bildlauf (Scrollen) durch die Liste der Radiosender erzeugen, um die angezeigte Teilmenge der Liste zu verändern. Um den Bedienvorgang auszuführen, nähert sich der Nutzer mit seiner Fingerspitze der Anzeigefläche 2 an. Tritt der Nutzer dabei in die Bedienzone vor der Anzeigefläche 2 ein, wird dies von dem Annäherungssensor 7 detektiert, woraufhin ein entsprechendes Signal von dem Annäherungssensor 7 an die Steuervorrichtung 3 übertragen wird. Die Steuervorrichtung 3 verändert daraufhin die Informationsdarstellung auf der Anzeigefläche 2. Es wird von dem in Fig. 3 gezeigten Anzeigezustand in den in Fig. 4 gezeigten Bedienzustand gewechselt. Bei diesem Übergang wird eine Animation angezeigt, bei welcher die Reihe mit den Listeneinträgen 9 perspektivisch so weit nach vorne geschwenkt wird, bis alle Listeneinträge 9 gleich dargestellt sind. In diesem Fall ist die Größe des Bereichs, den jeder Listeneintrag 9 auf der Anzeigefläche 2 einnimmt, identisch. Des Weiteren werden die Listeneinträge 9 in Schaltflächen umgewandelt, die von einem Nutzer betätigt werden können.

Unter einer *Schaltfläche* wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen bzw. Anzeigenflächen, darin, dass sie auswählbar sind. Bei einer Auswahl einer Schaltfläche wird eine ihr zugeordnete Funktion ausgeführt. Die Funktion kann nur zu einer Veränderung der Informationsanzeige führen. Ferner können über die Schaltflächen auch Einrichtungen gesteuert werden, deren Bedienung von der Informationsanzeige unterstützt wird. Die Schaltflächen können somit herkömmliche mechanische Schalter ersetzen. Die Schaltflächen können beliebig auf einer frei programmierbaren Anzeigefläche 2 erzeugt und angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Die Markierung und/oder Auswahl einer Schaltfläche kann mittels einer Cursorsteuerung oder durch direkte Bedienung einer berührungsempfindlichen Anzeigefläche 2 erfolgen.

Der Nutzer kann im Bedienzustand die angezeigte Teilmenge der Liste der Radiosender durch eine auf der berührungsempfindlichen Oberfläche der Anzeigefläche 2 ausgeführte Wischgeste verändern. Hierfür berührt der Nutzer die Anzeigefläche 2 im Bereich eines Listeneintrags 9 und führt die Fingerspitze auf der berührungsempfindlichen Oberfläche der Anzeigefläche 2 bei einer Anordnung der Listeneinträge 9, wie sie in Fig. 4 dargestellt ist, nach rechts oder links. Auf diese Weise kann der Nutzer Listeneinträge 9, die in der Ordnung der Liste mit den Radiosendern neben den angezeigten Listeneinträgen 9 angeordnet sind, zur Anzeige bringen, wie dies in Fig. 5 dargestellt ist. Wie aus Fig. 5 ersichtlich, verändert sich die Fläche, die ein Listeneintrag 9 auf der Anzeigefläche 2 einnimmt, bei einer Veränderung der angezeigten Teilmenge der Liste nicht. Auch bei der in Fig. 5 gezeigten Anzeige nimmt jeder Listeneintrag 9 die gleiche Fläche auf der Anzeigefläche 2 ein. Die jeweils von den Listeneinträgen 9 eingenommene Fläche ist, wie in Fig. 4 und Fig. 5 gezeigt, vor und nach dem Bedienvorgang dieselbe. Die Listeneinträge 9 für die Radiosender sind somit immer in gleicher Weise gut vom Nutzer erfassbar. Bei keiner Darstellung wird ein bestimmter angezeigter Listeneintrag 9 kleiner, durch eine perspektivische Darstellung verzerrt oder von einem anderen Listeneintrag 9 verdeckt dargestellt.

Des Weiteren kann ein Listeneintrag 9 durch einen Bedienvorgang ausgewählt werden. Bei dem hier beschriebenen Ausführungsbeispiel erfolgt die Auswahl eines Listeneintrags dadurch, dass die berührungsempfindliche Oberfläche der Anzeigefläche 2 in dem Bereich berührt wird, der von dem Listeneintrag 9 ausgefüllt wird, welcher ausgewählt werden soll. Ausgehend von der in Fig. 5 gezeigten Anzeige kann der Nutzer beispielsweise den Listeneintrag 9 für den Radiosender "Hit-Radio antenne Niedersachsen" durch Berührung des entsprechenden Bereichs der berührungsempfindlichen Oberfläche der Anzeigefläche 2 auswählen.

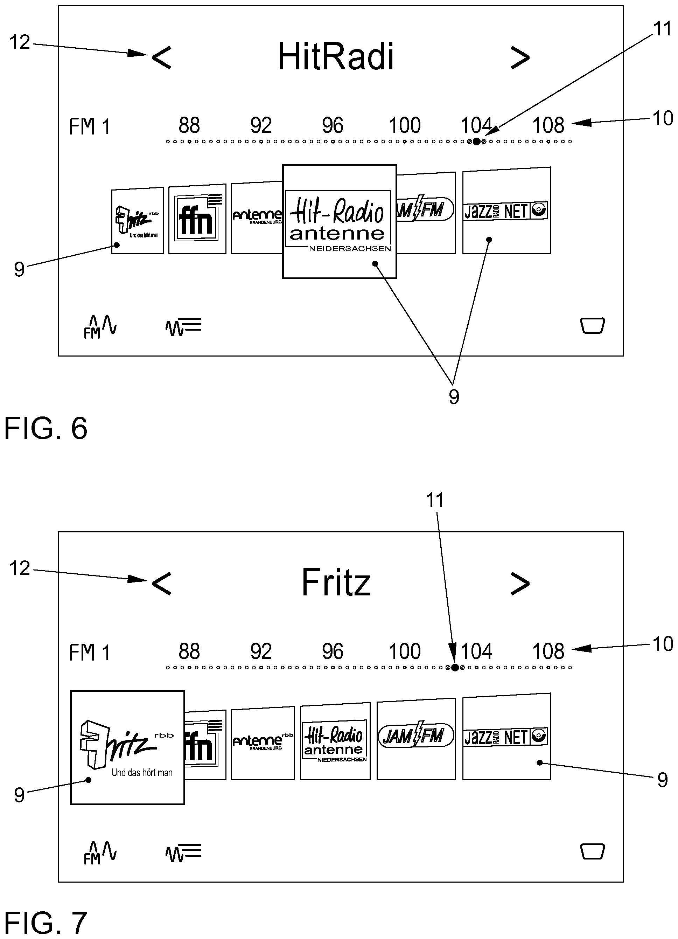

Entfernt der Nutzer nun seinen Finger nach der Auswahl eines Listeneintrags 9 wieder von der Anzeigefläche 2, wird dies nach dem Überschreiten einer bestimmten Entfernung von der Anzeigefläche 2, d. h. beim Verlassen der Bedienzone, von dem Annäherungssensor 7 detektiert. Der Annäherungssensor 7 überträgt wieder ein entsprechendes Signal an die Steuervorrichtung 3, welche daraufhin die Informationsdarstellung auf der Anzeigefläche 2 verändert. Die Informationsdarstellung wechselt von dem Bedienzustand in den Anzeigezustand. Im Anzeigezustand wird eine Darstellung angezeigt, wie sie in Fig. 6 gezeigt ist. Der ausgewählte Listeneintrag 9 wird in diesem Fall im Vordergrund angezeigt, die restlichen Listeneinträge 9 werden im Hintergrund angezeigt. Die restlichen Listeneinträge 9 werden insbesondere in einer Reihe perspektivisch nach hinten geschwenkt. Ferner wird die dem ausgewählten Listeneintrag 9 zugeordnete Frequenz von der Markierung 11 auf der Skala 10 angezeigt und der ausgewählte Listeneintrag 9 im Feld 12 alphanumerisch wiedergegeben.

Im Anzeigezustand wird der ausgewählte Listeneintrag 9 bei der Position im Vordergrund dargestellt, bei welcher er bei der Anzeige im Bedienzustand ausgewählt wurde. Falls als Listeneintrag 9 bei der Anzeige, die in Fig. 5 gezeigt ist, der Radiosender "Fritz" ausgewählt wird, wird bei der entsprechenden Position der Listeneintrag 9 für diesen Radiosender, wie in Fig. 7 gezeigt, im Vordergrund dargestellt und die restlichen Listeneinträge 9 rücken durch ein Schwenken der Reihe nach hinten in den Hintergrund.

Es wird schließlich darauf hingewiesen, dass beim Entfernen des Fingers von der Anzeigefläche 2, die Informationsdarstellung nicht sofort in den Anzeigezustand wechselt. Vielmehr wird abgewartet, ob der Finger nicht wieder innerhalb eines in der Steuervorrichtung 3 definierten Zeitintervalls wieder in die Bedienzone eintritt. Falls dies der Fall ist, wird die Informationsdarstellung nicht verändert. Falls der Finger oder ein anderes Objekt nicht wieder in die Bedienzone eintritt, wird die Informationsdarstellung nach Ablauf des Zeitintervalls in den Anzeigezustand versetzt.

### BEZUGSZEICHENLISTE

- 1: Anzeigevorrichtung
- 2: Anzeigefläche
- 3: Steuervorrichtung
- 4: Speicher
- 5: Eingabeeinrichtung
- 6: Fahrzeugbus
- 7: Annäherungssensor
- 8: graphische Objekte
- 9: Listeneinträge
- 10: Frequenzskala
- 11: Markierung
- 12: Anzeigefeld

## Patentansprüche

1. Verfahren zum Anzeigen von in Listen geordneter Information auf einer Anzeigefläche (2), bei dem
- die Informationsdarstellung in einem Bedienzustand und in einem Anzeigezustand erfolgt, wobei im Bedienzustand ein Bedienvorgang mittels einer Eingabeeinrichtung (5) durchführbar ist und im Anzeigezustand kein Bedienvorgang mittels der Eingabeeinrichtung (5) durchführbar ist,
- auf der Anzeigefläche (2) eine Teilmenge einer Liste angezeigt wird, die mehrere Listeneinträge (9) umfasst, wobei die Listeneinträge (9) jeweils einen Bereich der Anzeigefläche (2) einnehmen,
- die angezeigte Teilmenge der Liste im Bedienzustand durch einen ersten Bedienvorgang eines Nutzers verändert wird, wobei sich die Fläche, die ein Listeneintrag (9) auf der Anzeigefläche (2) einnimmt, nicht verändert
**dadurch gekennzeichnet, dass**
- wenn ein Listeneintrag (9) im Bedienzustand durch einen zweiten Bedienvorgang eines Nutzers ausgewählt worden ist, der ausgewählte Listeneintrag (9) im Anzeigezustand in den Vordergrund gerückt wird und die restlichen Listeneinträge (9) der Liste in den Hintergrund gerückt werden, indem sie perspektivisch nach hinten geschwenkt dargestellt werden.

2. Verfahren nach Anspruch 1,
**dadurch gekennzeichnet,**
**dass** von dem Anzeigezustand in den Bedienzustand gewechselt wird, wenn eine Annäherung eines Objekts an die Eingabeeinrichtung (5) detektiert wurde.

3. Verfahren nach Anspruch 1 oder 2,
**dadurch gekennzeichnet,**
**dass** von dem Bedienzustand in den Anzeigezustand gewechselt wird, wenn ein Entfernen eines Objekts von der Eingabeeinrichtung (5) detektiert wurde.

4. Verfahren nach Anspruch 3,
**dadurch gekennzeichnet,**
**dass** nur dann von dem Bedienzustand in den Anzeigezustand gewechselt wird, wenn das Objekt nicht innerhalb eines definierten Zeitintervalls wieder in eine Bedienzone eintritt.

5. Verfahren nach einem der vorhergehenden Ansprüche,
**dadurch gekennzeichnet,**
**dass** die Eingabeeinrichtung (5) eine berührungsempfindliche Oberfläche umfasst und der erste Bedienvorgang eine auf der berührungsempfindlichen Oberfläche ausgeführte Wischgeste ist.

6. Verfahren nach einem der vorhergehenden Ansprüche,
**dadurch gekennzeichnet,**
**dass** die Eingabeeinrichtung (5) eine auf der Anzeigefläche (2) ausgebildete berührungsempfindliche Oberfläche umfasst und der zweite Bedienvorgang zur Auswahl eines Listeneintrags (9) im Bedienzustand eine Berührung der berührungsempfindlichen Oberfläche in dem von dem Listeneintrag (9) eingenommenen Bereich der Anzeigefläche (2) ist und der ausgewählte Listeneintrag (9) im Anzeigezustand in den Vordergrund und die restlichen Listeneinträge (9) der Liste in den Hintergrund rücken, wenn das Objekt von der Eingabeeinrichtung (5) entfernt wird.

7. Vorrichtung zum Anzeigen von in Listen geordneter Information mit
- einer Anzeigevorrichtung (1) mit einer Anzeigefläche (2),
- einem Speicher (4) zum Speichern einer Liste, die eine Vielzahl von Listeneinträgen (9) umfasst, von der eine Teilmenge auf der Anzeigefläche (2) anzeigbar ist,
- einer Eingabeeinrichtung (5) und
- einer Steuervorrichtung (3), die mit der Eingabeeinrichtung (5) und der Anzeigevorrichtung (1) gekoppelt ist und mit welcher die auf der Anzeigefläche (2) wiedergegebene Anzeige steuerbar ist, wobei die Steuervorrichtung so ausgebildet ist,
- dass die Informationsdarstellung in einem Bedienzustand und in einem Anzeigezustand erfolgt, wobei im Bedienzustand ein Bedienvorgang mittels der Eingabeeinrichtung (5) durchführbar ist und im Anzeigezustand kein Bedienvorgang mittels der Eingabeeinrichtung (5) durchführbar ist,
- dass eine Teilmenge der Liste anzeigbar ist, die mehrere Listeneinträge (9) umfasst, wobei die Listeneinträge (9) jeweils einen Bereich der Anzeigefläche (2) einnehmen, und
- dass im Bedienzustand die angezeigte Teilmenge der Liste durch einen ersten Bedienvorgang eines Nutzers veränderbar ist, wobei sich die Fläche, die ein Listeneintrag (9) auf der Anzeigefläche (2) einnimmt, nicht verändert,
**dadurch gekennzeichnet, dass**
- ein Listeneintrag (9) vom Nutzer durch einen zweiten Bedienvorgang auswählbar ist und der ausgewählte Listeneintrag (9) im Anzeigezustand in den Vordergrund gerückt wird und die restlichen Listeneinträge (9) in der Liste in den Hintergrund gerückt werden, indem sie perspektivisch nach hinten geschwenkt dargestellt werden.

8. Vorrichtung nach Anspruch 7
**dadurch gekennzeichnet,**
**dass** die Vorrichtung einen Annäherungssensor (7) umfasst, mit dem ein Eintreten eines Objekts in eine Bedienzone, die der Eingabeeinrichtung (5) zugeordnet ist, und ein Verlassen der Bedienzone detektierbar ist.

9. Vorrichtung nach Anspruch 7 oder 8
**dadurch gekennzeichnet,**
**dass** die Steuervorrichtung (3) so ausgebildet ist, dass auf der Anzeigefläche (2) beim Eintreten des Objekts in die Bedienzone vom Anzeigezustand in den Bedienzustand gewechselt wird und beim Verlassen der Bedienzone von dem Bedienzustand in den Anzeigezustand gewechselt wird.

10. Vorrichtung nach einem der Ansprüche 7 bis 9
**dadurch gekennzeichnet,**
**dass** die Eingabeeinrichtung (5) eine berührungsempfindliche Oberfläche umfasst.

11. Vorrichtung nach einem der Ansprüche 7 bis 9
**dadurch gekennzeichnet,**
**dass** die Eingabeeinrichtung (5) eine Einrichtung zum Erfassen und Auswerten einer Geste eines Körperteils eines Nutzers umfasst, die vor der Anzeigefläche (2) ausgeführt wird.

## Claims

1. Method for displaying information arranged in lists on a display surface (2), in which
- the information is presented in an operating state and in a display state, in which case an operating process can be carried out by means of an input device (5) in the operating state and an operating process cannot be carried out by means of the input device (5) in the display state,
- a subset of a list comprising a plurality of list entries (9) is displayed on the display surface (2), the list entries (9) each occupying a region of the display surface (2),
- the displayed subset of the list is changed in the operating state by means of a first operating process by a user, in which case the area occupied by a list entry (9) on the display surface (2) does not change,
**characterized in that**
- if a list entry (9) has been selected in the operating state by means of a second operating process by a user, the selected list entry (9) is moved into the foreground in the display state and the remaining list entries (9) in the list are moved into the background by being perspectively presented in a manner pivoted to the rear.

2. Method according to Claim 1,
**characterized**
**in that** a change is made from the display state to the operating state if it has been detected that an object has approached the input device (5).

3. Method according to Claim 1 or 2,
**characterized**
**in that** a change is made from the operating state to the display state if it has been detected that an object has been removed from the input device (5).

4. Method according to Claim 3,
**characterized**
**in that** a change is made from the operating state to the display state only when the object does not enter an operating zone again within a defined interval of time.

5. Method according to one of the preceding claims,
**characterized**
**in that** the input device (5) comprises a touch-sensitive surface and the first operating process is a swiping gesture carried out on the touch-sensitive surface.

6. Method according to one of the preceding claims,
**characterized**
**in that** the input device (5) comprises a touch-sensitive surface formed on the display surface (2), and the second operating process for selecting a list entry (9) in the operating state involves touching the touch-sensitive surface in that region of the display surface (2) which is occupied by the list entry (9), and the selected list entry (9) moves into the foreground in the display state and the remaining list entries (9) in the list move into the background if the object is removed from the input device (5).

7. Apparatus for displaying information arranged in lists, having
- a display apparatus (1) having a display surface (2),
- a memory (4) for storing a list comprising a multiplicity of list entries (9), a subset of which can be displayed on the display surface (2),
- an input device (5), and
- a control apparatus (3) which is coupled to the input device (5) and to the display apparatus (1) and can be used to control the display reproduced on the display surface (2), the control apparatus being designed in such a manner
- that the information is presented in an operating state and in a display state, in which case an operating process can be carried out by means of the input device (5) in the operating state and an operating process cannot be carried out by means of the input device (5) in the display state,
- that a subset of the list comprising a plurality of list entries (9) can be displayed, the list entries (9) each occupying a region of the display surface (2), and
- that the displayed subset of the list can be changed in the operating state by means of a first operating process by a user, in which case the area occupied by a list entry (9) on the display surface (2) does not change,
**characterized in that**
- a list entry (9) can be selected by the user by means of a second operating process, and the selected list entry (9) is moved into the foreground in the display state and the remaining list entries (9) in the list are moved into the background by being perspectively presented in a manner pivoted to the rear.

8. Apparatus according to Claim 7,
**characterized**
**in that** the apparatus comprises a proximity sensor (7) which can be used to detect when an object enters an operating zone assigned to the input device (5) and leaves the operating zone.

9. Apparatus according to Claim 7 or 8,
**characterized**
**in that** the control apparatus (3) is designed in such a manner that a change is made from the display state to the operating state on the display surface (2) when the object enters the operating zone and a change is made from the operating state to the display state when the object leaves the operating zone.

10. Apparatus according to one of Claims 7 to 9,
**characterized**
**in that** the input device (5) comprises a touch-sensitive surface.

11. Apparatus according to one of Claims 7 to 9,
**characterized**
**in that** the input device (5) comprises a device for capturing and evaluating a gesture of a body part of a user, which gesture is carried out in front of the display surface (2).

## Revendications

1. Procédé pour afficher des informations triées en listes sur une surface d'affichage (2), avec lequel
- la représentation des informations s'effectue dans un état de commande et dans un état d'affichage, une opération de commande au moyen d'un dispositif de saisie (5) pouvant être effectuée dans l'état de commande et aucune opération de commande au moyen du dispositif de saisie (5) ne pouvant être effectuée dans l'état d'affichage,
- une quantité partielle d'une liste est affichée sur la surface d'affichage (2), laquelle comporte plusieurs postes de liste (9), les postes de liste (9) occupant respectivement une zone de la surface d'affichage (2),
- à l'état de commande, la quantité partielle affichée de la liste est modifiée par une première opération de commande d'un utilisateur, la surface qu'occupe un poste de liste (9) sur la surface d'affichage (2) ne changeant pas,
**caractérisé en ce que**
- lorsqu'un poste de liste (9) a été sélectionné à l'état de commande par une deuxième opération de commande d'un utilisateur, le poste de liste (9) sélectionnée est déplacé au premier plan dans l'état d'affichage et les postes de liste (9) restants de la liste sont déplacés à l'arrière-plan **en ce qu'**ils sont représentés en perspective pivotés vers l'arrière.

2. Procédé selon la revendication 1, **caractérisé en ce qu'**un changement de l'état d'affichage à l'état de commande a lieu lorsqu'une approche d'un objet du dispositif de saisie (5) a été détectée.

3. Procédé selon la revendication 1 ou 2, **caractérisé en ce qu'**un changement de l'état de commande à l'état d'affichage a lieu lorsqu'un éloignement d'un objet du dispositif de saisie (5) a été détecté.

4. Procédé selon la revendication 3, **caractérisé en ce qu'**un changement de l'état de commande à l'état d'affichage a seulement lieu lorsque l'objet ne pénètre pas de nouveau dans une zone de commande pendant un intervalle de temps défini.

5. Procédé selon l'une des revendications précédentes, **caractérisé en ce que** le dispositif de saisie (5) comporte une surface tactile et la première opération de commande est un geste de balayage exécuté sur la surface tactile.

6. Procédé selon l'une des revendications précédentes, **caractérisé en ce que** le dispositif de saisie (5) comporte une surface tactile formée sur la surface d'affichage (2) et la deuxième opération de commande destinée à sélectionner un poste de liste dans l'état de commande est un contact de la surface tactile dans la zone de la surface d'affichage (2) occupée par le poste de liste (9), et le poste de liste (9) sélectionné est déplacé au premier plan dans l'état d'affichage et les postes de liste (9) restants de la liste sont déplacés à l'arrière-plan lorsque l'objet est éloigné du dispositif de saisie (5).

7. Dispositif pour afficher des informations triées en listes, comprenant
- un dispositif d'affichage (1) pourvu d'une surface d'affichage (2),
- un mémoire (4) destinée à mémoriser une liste qui comporte une pluralité de postes de liste (9) dont une quantité partielle peut être affichée sur la surface d'affichage (2),
- un dispositif de saisie (5) et
- un dispositif de commande (3) qui est connecté au dispositif de saisie (5) et au dispositif d'affichage (1) et qui permet de commander les affichages représentés sur la surface d'affichage (2), le dispositif de commande étant configuré de telle sorte
- que la représentation des informations s'effectue dans un état de commande et dans un état d'affichage, une opération de commande au moyen d'un dispositif de saisie (5) pouvant être effectuée dans l'état de commande et aucune opération de commande au moyen du dispositif de saisie (5) ne pouvant être effectuée dans l'état d'affichage,
- qu'une quantité partielle de la liste peut être affichée, laquelle comporte plusieurs postes de liste (9), les postes de liste (9) occupant respectivement une zone de la surface d'affichage (2), et
- qu'à l'état de commande, la quantité partielle affichée de la liste peut être modifiée par une première opération de commande d'un utilisateur, la surface qu'occupe un poste de liste (9) sur la surface d'affichage (2) ne changeant pas,
**caractérisé en ce que**
- un poste de liste (9) peut être sélectionné par l'utilisateur par une deuxième opération de commande et le poste de liste (9) sélectionnée est déplacé au premier plan dans l'état d'affichage et les postes de liste (9) restants de la liste sont déplacés à l'arrière-plan **en ce qu'**ils sont représentés en perspective pivotés vers l'arrière.

8. Dispositif selon la revendication 7, **caractérisé en ce que** le dispositif comporte un capteur d'approche (7) qui permet de détecter une pénétration d'un objet dans une zone de commande qui est associée au dispositif de saisie (5) ainsi qu'une sortie de la zone de commande.

9. Dispositif selon la revendication 7 ou 8, **caractérisé en ce que** le dispositif de commande (3) est configuré de telle sorte que lors de la pénétration d'un objet dans la zone de commande, un changement de l'état d'affichage à l'état de commande a lieu sur la surface d'affichage (2), et un changement de l'état de commande à l'état d'affichage a lieu lors de la sortie de la zone de commande.

10. Procédé selon l'une des revendications 7 à 9, **caractérisé en ce que** le dispositif de saisie (5) comporte une surface tactile.

11. Procédé selon l'une des revendications 7 à 9, **caractérisé en ce que** le dispositif de saisie (5) comporte un dispositif pour détecter et interpréter un geste d'une partie du corps d'un utilisateur qui est accompli devant la surface d'affichage (2).
